Europäisches Patentamt

European Patent Office

Office européen des brevets

(11) Publication number: **0 271 832**
**A1**

## (12) EUROPEAN PATENT APPLICATION

(21) Application number: 87118360.4

(51) Int. Cl.⁴: **G01L 1/12**

(22) Date of filing: 11.12.87

(30) Priority: 15.12.86 SE 8605377
15.12.86 SE 8605378

(43) Date of publication of application:
**22.06.88 Bulletin 88/25**

(84) Designated Contracting States:
**DE FR GB IT**

(71) Applicant: **ASEA AB**

**S-721 83 Västeras(SE)**

(72) Inventor: **Nordvall, Jan O.**
**Rundhällsvägen 10**
**S-722 31 Västeras(SE)**

(74) Representative: **Boecker, Joachim, Dr.-Ing.**
**Rathenauplatz 2-8**
**D-6000 Frankfurt a.M. 1(DE)**

(54) **Magnetoelastic force transducer.**

(57) A magnetoelastic force transducer comprising a closed core of magnetoelastic material provided with one excitation winding 20 which is to be fed with alternating current and two measuring windings 18,19 According to the invention the closed core consists of two identical cylindrical solid bodies 1,2 , each of which is formed with a first central hole 5,6 extending from one end surface 3,4 of the body and having an axial length shorter than that of the body. Each body is further provided with a tubular space 13,14 extending from the opposite end surface 3,4 of the body and having an axial length shorter than that of the body. The two bodies are axially aligned facing each other with their open tubular spaces 13,14 and are firmly connected with each other, thus forming an inner tubular space 13,14 housing a bobbin 17 on which the measuring windings and the excitation winding are wound. in one of said central holes a stud bolt 21 for the application of the force to be measured is inserted, whereby the cross-section of said first central hole is adapted to provide clearance against the shank of the stud bolt. To reduce the zero voltage signal at zero applied force the bobbin 17 can be hold and adjusted in the tubular space by means of screws 28 and 31 inserted into respective holes in the end walls of the transducer. A further means for mechanical neutral point compensation consists in inserting a spring 32 in one of the central holes whereby the spring can be prestressed by means of an adjustment screw 33

(Figure 7).

FIG. 7

# Magnetoelastic force transducer

The invention relates to a magnetoelastic force transducer according to the precharacterising part of Claim 1. Such a magnetoelastic force transducer is known, for example, from the SE-B-151 267.

A transducer of the afore-mentioned type comprises a force-subjected magnetic core built up of magnetoelastic sheets, which is provided with four through-holes for windings located perpendicular to each other, one winding being an excitation winding supplied from an a.c. source for generating a magnetic flux in the core, and the other winding being a measuring winding for sensing the magnitude of the magnetic flux passing through the measuring winding. The magnitude of this flux depends on the magnitude of the external force applied to the core.

The design principle of a magnetic core built up of magnetoelastic sheets has - since the development of the design shown in SE-B-151 267 - been further sophisticated in several respects to provide a transducer with improved performance.

An example of the latter is disclosed in EP-B-0 089 916. This shows a magnetoelastic force transducer with a specially formed sheet section with a measuring part formed as a double-bent beam. Such a transducer exhibits high linear ity and low zero voltage values. The zero voltage of a transducer is caused by internal stresses and crystal orientation in the sheet material, which have arisen, inter alia, during the manufacturing processes of the material, for example during rolling.

From the point of view of manufacture, however, the sophisticated transducers described above require considerable resources in terms of tools for sheet metal forming, punching, winding, gluing, etc. This also means that these transducers are relatively expensive, in particular in applications where there are no extreme demands for performance. Therefore, in various quarters there has been a long-felt need for a simple, robust and relatively inexpensive force transducer, which is favourable from the manufacturing point of view, for use in installations where the demands for linearity, zero residual voltage, etc., are not too severe.

The invention aims at the design of a magnetoelastic force transducer of the above-mentioned kind, which is extremely well suited to be manufactured at low cost by automatic series production.

To achieve this aim the invention suggests a magnetoelastic force transducer according to the introductory part of Claim 1, which is characterized by the features of the characterizing part of Claim 1.

Further developments of the invention are characterized by the features of the additional claims.

Specific for the transducer according to the invention is the new constructive design, which avoids a laminated core structure. The new constructive design involves a considerable simplification, as far as manufacture and installation are concerted, in relation to the prior art magnetoelastic force transducers. The need of such a robust and inexpensive force transducer exists everywhere in the engineering and other industry for control and supervision of various processes.

A magnetoelastic transducer according to the invention consists of two identical solid bodies the shape of which is preferably circular-cylindrical. Extending from the first circular end surface a first axial centre hole is provided with an axial length somewhat shorter than the length of the cylindrical body. A second axial centre hole with a diameter smaller than that of the above-mentioned centre hole is made in the remaining central part of the cylindrical body. This hole is provided with an internal thread.

Extending from the second circular end surface of the cylindrical body, a concentric tubular space is provided having an axial length somewhat shorter than the length of the body. The inner diameter of the tubular space is adapted such that a thin cylindrical tubular wall is formed between this space and the first central hole.

The two cylindrical bodies are to be mounted against each other in such a way that the tubular spaces are facing each other. The mounting together is preferably performed by means of a stud bolt with a shank diameter adapted to provide clearance in the first central hole and with a bolt dimension adapted for the threads of the smaller threaded centre hole. The shank of the stud bolt should have such a length as to project somewhat outwards from the assembled transducer. In order that the stud bolt should not disturb the magnetic field configuration of the transducer, it is suitably made of a non-magnetic material.

In the total tubular space that is formed when the cylindrical bodies are mounted together there is placed a bobbin, the inner diameter of which is dimensioned to fit against the outer diameter of the thin cylindrical tubular wall and the axial length of which corresponds to the axial length of the total tubular space. The bobbin is provided with two measuring windings wound on the bobbin in such a way that each measuring winding will be located, in the axial direction in one of the two assembled cylindrical bodies. The bobbin is also provided with an excitation winding disposed radially outside the measuring windings and extending over the entire axial length of the bobbin.

The measuring windings are electrically connected in opposite, which means that the voltage induced in the windings out-balance each other as long as no force is applied, the total output voltage thus being approximately zero.

By placing the transducer with one of its end surfaces against a fixed base and allowing the force to be measured to be applied on the shank of the stud bolt, a compressive stress is obtained in the thin cylindrical tubular wall which is positioned nearest to the base, and a tensile stress is obtained in the thin cylindrical tubular wall which faces the force-applying side. This influences the magnetic conditions in a known manner for magnetoelastic force transducers, and a signal proportional to the applied force can be obtained.

The transducer can be changed in a very simple way for measuring tensile forces. This can be done, for example, by providing the stud bolt with a loop or the like.

A magnetoelastic force transducer described so far will, with a certain probability, exhibit a certain residual voltage at zero applied force and will have a certain linearity imperfection. However, there are applications in which such a transducer is acceptable because of its simplicity, ro bustness and inexpensiveness. Examples of these cases are when the force measurement is to take place only within a relatively narrow force interval or when the transducer is to operate as a simple overload protective device.

In many applications, however, it is a requirement that the output signal of the transducer is zero or near to zero at zero applied force. Also, for safety reasons it is often required that the residual zero voltage must not be compensated electrically, which may have serious consequences in the event of a failing electricity supply.

The limited performance of the so far described force transducer according to the invention, especially with regard to the zero signal at zero applied force, can be markedly improved with some minor and inexpensive additional features.

For this purpose, the two cylindrical bodies are provided with preferably two diametrically and concentrically positioned threaded holes in that end surface that comprises the opening of the first central hole. These threaded holes extend into the tubular space housing the bobbin with its windings. The axial length of the bobbin is made shorter than the entire axial length of the tubular space. Thus by inserting screws into the additional threaded holes the position of the axial bobbin can be adjusted such as to nullify or reduce the zero voltage signal at zero applied force.

A further possibility to afford mechanical compensation consists and providing at least one of the first central holes with threads and inserting into the stud-free one of the first central holes of the transducer a coil spring the prestress of which can be adjusted by an adjustment screw having threads adapted for the threads of the first central hole.

By prestressing the spring to a smaller or greater extent, a suitable force is added, which counteracts the residual zero signal. Since the path of force of the spring is much longer than the compression of the force of the spring is much longer than the compression of the transducer upon loading, the spring force will only be changed to a negligible extent when the transducer is subjected to load, i.e. the transducer has been loaded with a constant force.

Instead of using a coil spring, it is, of course, possible to use a suitable number of spring washers. · .

The invention will now be described in greater detail with reference to the accompanying drawings showing - by way of example - in

Figure 1 the first of two identical cylindrical solid bodies that are included in a first embodiment of a magnetoelastic force transducer according to the invention,

Figure 2 a bobbin on which two measuring windings and one excitation winding are wound,

Figure 3 the second of the two cylindrical solid bodies that are included in the magentoelastic force transducer according to the invention,

Figure 4 the assembled magnetoelastic force transducer comprising the components shown in Figures 1 to 3,

Figures 5 and 6 the two identical bodies of a second embodiment of a transducer according to the invention,

Figure 7 the second embodiment of a transducer that comprising the bodies of Figure 5 and 6.

Figure 8 the electrical connection of the windings included in the force transducers.

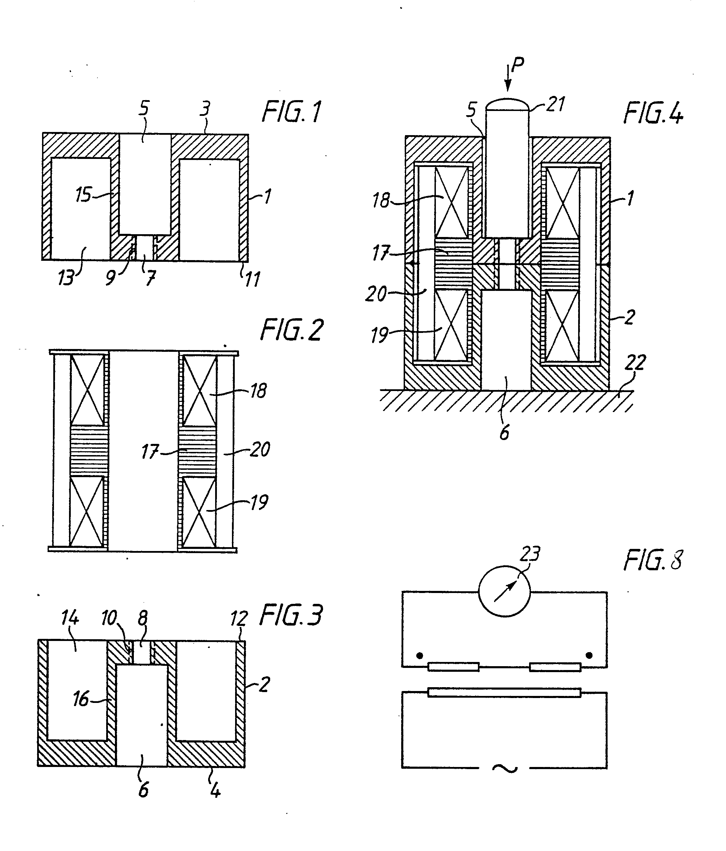

Figures 1 and 3 show two identical, cylindrical bodies 1 and 2, with first axial centre holes 5 and 6 extending from one circular end surfaces 3 and 4, the axial length or axial depth of these holes being somewhat shorter than the axial length of the cylindrical bodies 1,2.

Second axial centre holes 7 and 8 with threads 9 and 10 are provided in the remaining central core portion.

From the opposite end surfaces 11 and 12 of the cylindrical bodies 1,2, concentric tubular spaces 13 and 14 extend into the bodies 1,2, the axial length of these spaces, as will also be clear from Figures 1 and 3, also being somewhat shorter than the length of the cylindrical bodies 1,2. In this way, a thin cylindrical tubular wall 15 and 16, respectively, separates the spaces 5,13 and 6,14, respectively.

Figure 2 shows the bobbin 17 on which the measuring windings 18 and 19 and the excitation winding 20 are wound. The inner diameter of the bobbin 17 is dimensioned for slide fit against the outer diameter of the inner cylindrical tubular wall 15.

Figure 4 shows a magnetoelastic force transducer with the cylindrical bodies 1 and 2 from Figures 1 and 3 and the bobbin 17 from Figure 2 mounted together. To keep the two cylindrical bodies 1,2 locked against each other, the mounting is performed with the aid of a stud bolt 21, to which the force P to be measured is applied. The shank diameter of the stud bolt 21 is adapted to provide clearance in the centre hole 5 (or 6), and the stud bolt 21 has a screw thread corresponding to the threads 9 and 10 in the holes 7 and 8.

During force measurement, the transducer is placed on a fixed base 22.

For measuring tensile force, as mentioned above the stud bolt 21 is provided with a loop or the like (not shown in Figure 4).

The basic design of a transducer according to the invention is shown in Figure 4 consisting of the three components in the Figures 1 to 3 and the stud bolt 21 that carries a threaded portion extending from its inner end face by means of which the two cylindrical bodies 1 and 2 are firmly screwed together.

The wiring of the windings is shown in Figure 8. As will be clear, the measuring windings for such transducers are connected in opposition in a conventional way. An output signal, proportional to the applied force, is generated and applied to an instrument 23, which after calibration is used for reading the force applied at that particular moment.

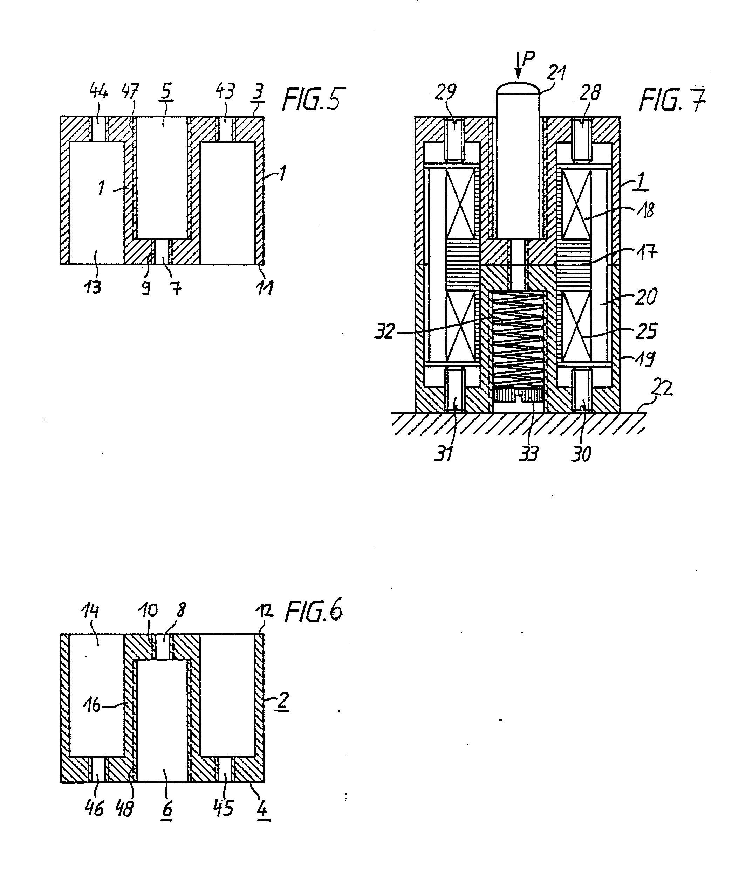

Figures 5 to 7 show a modified embodiment of a force transducer according to the invention which is provided with means for mechanical neutral point compensation. In Figure 5 to 7 like numerals as in Figures 1 to 4 refer to corresponding components and portions. As is clear from the Figures 5 to 7 the changes necessary to afford mechanical neutral point compensation are relatively minor. The two identical solid bodies 1,2 in Figure 5 and 6, respectively differ from the bodies in Figure 1 and 3 in so far as the first central holes 5,6 are provided with internal threads 47,48. Furthermore, the end surfaces 3,4 are provided with two diametrically and concentrically positioned threaded holes 43,44 and 45,46, respectively, these hole passing through the end wall into the tubular space 13,14. A further change, as will be clear from figure 6, consists in select ing the axial length of the bobbin 17 shorter than the total axial length of the tubular space 15,16 in the assembled force transducer. With these changes it is possible to axially adjust and fix the bobbin 17 in the tubular space 13,14 with the help of four adjusting screws 28 to 31 inserted in the threaded holes 43 to 46. A first rough adjustment of the axial position of the bobbin is made while assembling the force transducer. The final setting of the axial position of the bobbin 17 in the transducer will be made later in connection with the calibration of the transducer. The position of the bobbin 17 is adjusted axially until the output signal of the transducer at zero applied force becomes zero or attains its minimum value.

If higher demands are placed on zero residual voltage compensation, a spring 32 can be placed in the space 6 for further fine adjustment. Prestressing of the spring force is performed by with an adjusting screw 33. As shown in Figure 6, the spring 32 may consist of a coil spring or of a number of spring washers.

With the embodiments shown in the Figures the two solid bodies 1 and 2 are of cylindrical shape with the first central holes 5,6 and the bobbin having circular cross-sections and the tubular spaces 13,14 having circular cylindrical crosssections. Although this circular shape is the most favourable from the view point of manufacture, space utié lization and the uniformity of the magnetic circuit, other shapes are feasible. Instead of the circular-cylindrical shape other cross-sectional shapes of the solid bodies, the central holes 5,6, the bobbin 17 with the windings, the thicker portion of the stud bolt, and the tubular spaces 13,14 can be used, such as other cylindrical shapes, for example an elliptical-cylindrical shape, or prismatic shapes, for example a rectangular or a square shape. Such shapes could be useful if the force transducers have to be posi tioned in certain limited spaces, and there manufacture could be facilitated by forming the solid bodies along with there holes and spaces by means of precision casting.

Also the connecting together of the two solid bodies could be effected in other ways than by means of the stud 21. For example a screw means separate from the stud 21 could be used or the cylindrical bodies could be provided with connecting flanges at their adjoining end faces.

Within the scope of the invention other possibilities are provided for supplementing and changing the constructive elements to a certain extent. To guide the shank of the stud bolt 21, the hole 5 can be provided with a bearing busing of a suitable low friction material.

The transducer can also suitably be provided with a flange of some kind or be given other possibilities for fixing it against the bases 22.

## Claims

1. A magnetoelastic force transducer comprising a closed core of magnetoelastic material provided with one excitation winding (20) which is to be fed with alternating current and two measuring windings (18,19), **characterized** in that the closed core consists of two identical cylindrical or prismatic solid bodies (1,2), that each body is formed with a first central hole (5,6) extending from one end surface (3,4) of the body and having an axial length shorter than that of the body, that each body is further provided with a tubular space (13,14) extending from the opposite end surface (3,4) of the body and having an axial length shorter than that of the body, that the two bodies are axially aligned facing each other with their open tubular spaces (13,14) and being firmly connected with each other, thus forming an inner, axially and concentrically arrange tubular space (13,14) housing a bobbin (17) on which the measuring windings and the excitation winding are would, and that in one of said central holes a stud bolt (21) for the application of the force to be measured is adapted to be inserted, whereby the cross-section of said first central hole is adapted to provide clearance against the shank of the stud bolt.

2. Magnetoelastic force transducer according to Claim 1, **characterized** in that in the remaining central part of the bodies second, threaded axial holes (7,8,9,10) are provided and that threaded screw means are inserted into said holes for screwing together the two bodies.

3. Magnetoelastic force transducer according to Claim 2 **characterized** in that the screw means form an integral part of the stud bolt 21.

4. Magnetoelastic force transducer according to any of the preceding Claims, **characterized** in that the solid bodies (1,2), the first centre holes (5,6), the bobbin (17) with the windings, the thicker portion of the stud bolt (21), and/or the annular spaces (13,14) are of circularcylindrical shape.

5. Magnetoelastic force transducer according to any of Claims 1 to 3, **characterized** in that the solid bodies (1,2), the first centre holes (5,6), the bobbin (17) with the windings, the thicker portion of the stud bolt (21), and/or the annular spaces (13,14) are of prismatic shape, preferably rectangular of square shape.

6. Magnetoelastic force transducer according to any of the preceding Claims, **characterized** in that each measuring winding (18,19) is placed axially in a respective one of the two bodies and surrounds the concentric, tubular wall which is formed between the first central axial hole and the inner concentric, tubular space (13,14).

7. Magnetoelastic force transducer according to any of the preceding Claims, **characterized** in that the excitation winding (20) extends axially over the entire length of the bobbin (17).

8. Magnetoelastic force transducer according to any of the preceding Claims, **characterized** in that the stud bolt (21) is made of a non-magnetic material and that its shank is longer than the length of the central first hole(5).

9. Magnetoelastic force transducer according to any of the preceding Claims, **characterized** in that the threaded holes (43,44,45,46) extend from the outwardly-directed end surfaces (3,4) of the transducer into the tubular space (13,14), that the axial length of the bobbin 17 is shorter than that of the tubular space (13,14) and that adjustment screws (28,29,30,31) are inserted into the holes (43,44,45,46) these screws being adapted to adjust and fix the axial position of the bobbin (17) in the transducer.

10. Magnetoelastic force transducer according to Claim 9, **characterized** in that said threaded holes (13,14,15,16) are positioned diametrically and concentrically.

11. Magnetoelastic force transducer according to any of the preceding Claims, **characterized** in that at least the first central hole (5,6) of one of the two solid bodies is provided with threads (47,48) and that in one of the threaded central holes (5,6) a spring (32) and an adjusting screw (33) are inserted, the adjustment screw being adapted to prestress the spring (32) to such a force that the output voltage of the transducer in the case of an exited core and zero applied force become zero or has a minimum value.

0 271 832

FIG.1

5    3

15

13  9  7  11
1

FIG.2

18

17    20

19

FIG.3

14  10  8  12

16

2

6    4

FIG.4

P

5    21

18

17

20

19

1

2

22

6

FIG.8

23

~

0 271 832

FIG.5

FIG.6

FIG.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| A | - - -<br>US-A-1 906 551 (A V DE FOREST<br>* page 5, column 1 line 9 - page 5, column 2 line 121, figure 4 * | 1 | G 01 L 1/12 |
| A | - - -<br>US-A-3 681 982 (HIRATSUKA ET AL)<br>* column 5 line 35-51, figure 3, 4 * | 1 | |
| A | - - -<br>US-A-3 320 802 (G BIRKHOLTZ)<br>* column 4 line 66-70, figure 2 * | 11 | |
| A | - - -<br>SU-A-1030-675-A (UFA AVIATION INST)<br>* figure 1 * | 1 | TECHNICAL FIELDS SEARCHED (Int. Cl.4)<br><br>G 01 L<br>G 01 B |
| A | - - -<br>EP-A3-0 142 110 (ASEA AB)<br>* page 3 line 10 - page 4 line 1, figure 1 A * | 1 | G 01 G |

The present search report has been drawn up for all claims.

| Place of search | Date of completion of the search | Examiner |
|---|---|---|
| Stockholm | 17-02-1988 | Lars Jakobsson |